# EUROPEAN PATENT APPLICATION

(11) **EP 4 848 387 A1**
(43) Date of publication of application: **02.12.2026**
(21) Application number: 25178829.5
(22) Date of filing: 26.05.2025
(51) Int. Cl.: H01M 10/04, H01M 10/613, H01M 10/6554, H01M 50/204, H01M 50/289

(54) **A MANUFACTURING DEVICE FOR A BATTERY PACK AND METHOD FOR THERMALLY CONNECTING A PLURALITY OF BATTERY CELLS TO A COOLING PLATE**

(71) Applicant: SAMSUNG SDI CO., LTD., Yongin-si, Gyeonggi-do 17084 (KR)
(72) Inventor: Fuerpass, Anton, 8552 Eibiswald (AT); Maresch, Dominik, 8071 Hausmannstaetten (AT)
(74) Representative: Gulde & Partner

(57) **Abstract**

The present disclosure refers to a manufacturing device (100) for a battery pack including a frame for stacking battery cells, and a cooling plate with a gap filler material arranged on the frame. The device (100), that optimizes the thermal performance of the manufactured battery pack, includes a vacuum bonnet (105) for sealing to a circumference of the battery cells (101) and applying a vacuum for sucking the gap filler material (104) along adjacent cavities.

## Description

### Field of the Disclosure

Embodiments of the present disclosure relate to thermally connecting battery cells to a cooling plate.

### Technological Background

Generally, a rechargeable (or secondary) battery cell includes an electrode assembly including a positive electrode, a negative electrode, and a separator interposed between those electrodes. A solid or liquid electrolyte enables movement of ions during the charging and discharging of the battery cell. The electrode assembly is located in a casing, and electrode terminals, which are positioned on the outside of the casing, establish an electrically conductive connection to the electrodes. Common battery cell formats include, for example, cylindrical, prismatic, and pouch.

A battery pack is a set of any number of (for example identical) battery modules and/or individual battery cells. The battery modules and/or battery cells may be configured in a series, parallel or a combination of both to provide the desired voltage, capacity, and/or power density. Components of a battery pack include the individual battery modules, and interconnects, which provide electrical conductivity between the battery modules.

An active or passive thermal management system may be included to provide thermal control of the battery pack, to safely use at least one battery module by efficiently emitting, discharging, and/or dissipating heat generated from its battery cells. If the heat emission, discharge, and/or dissipation is not sufficiently performed, temperature deviations may occur between respective battery cells, such that the at least one battery module may no longer generate a desired (or designed) amount of power. In addition, an increase of the internal temperature can lead to abnormal reactions occurring in the battery cells. Hence, the charging and discharging performance of the battery cells deteriorates and the lifespan of the battery cells is shortened. Thus, cell cooling for effectively emitting, discharging, and/or dissipating heat from the battery cells is important.

The effective management of thermal energy is essential for the optimal functioning and longevity of battery cells in mobile applications. This is because the ability to regulate temperature is crucial for maintaining full performance and operational readiness in a wide range of conditions. Thermal management encompasses both cooling and heating operations. Given the considerable diversity of battery cell variants, characterized by differences in cell chemistry and structure, thermal management must be tailored to the specific requirements of each variant. A similar situation pertains to the numerous different vehicle applications, which encompass a range of vehicles from small city cars to sports cars, as well as vehicles with mild hybridization and purely electric vehicles. Furthermore, integration into the vehicle's thermal circuits is of significant importance.

In the case of air cooling, cooling air flows around the battery cell, thereby cooling the freely accessible surfaces. As this type of cooling does not necessitate direct thermal contact with the cell, the interface to the cooling system is relatively straightforward. Nevertheless, the installation space required for the cooling air ducts between the battery cells is considerable, and the cooling effectiveness, for example the homogeneity of cell cooling, is often inadequate. In contrast, cooling methods that establish thermal contact with the battery cell and dissipate the heat via heat conduction are demonstrably more effective than air cooling in terms of cooling efficacy. Nevertheless, the design of the thermal contact presents a new set of challenges. The interface to the cooling system is more complex, as the cooling apparatus is in direct contact with the electrical components of the battery cell. In the case of cells with a low height and sufficiently thick cell walls, it is sufficient to simply make contact with the bottom of the battery cell via a cooling plate. Should this prove inadequate, supplementary heat conduction elements must be incorporated between the cells to facilitate the transfer of heat to the cooling plate. However, this results in a heavier and more expensive cooling system. The use of fluid-conducting cooling plates between the cells has been demonstrated to be an effective method, as the heat conduction path from the interior of the cell to the cooling fluid is relatively short, resulting in a high degree of temperature homogeneity within the battery cell. An alternative approach to cooling is arrester cooling. In this method, the interior of the battery cell is cooled directly via the electrodes. Pouch cells are particularly well-suited for this type of cooling, as they have flat and therefore relatively easy-to-contact terminals. The waste heat from the cells is directed into a cooling plate. There, either cooling water or an evaporating refrigerant absorbs the heat and dissipates it to the environment via the vehicle's cooling or refrigeration system.

Usually, a gap filler material is used to thermally connect battery cells to one another. Currently, the prevention method for air trapped in the gap filler material, which is usually polyurethane, underneath the battery cells during the stacking process or mounting of the cooling plate is tackled by applying lines of gap filler material and selecting a high viscosity product to ensure it spreads evenly.

However, this method does not ensure a full wetting of the battery cell with gap filler and therefore air bubbles remain. Air bubbles in the gap filler material reduce the thermal performance due to the isolating behavior of air.

It is therefore an objective of the present invention to improve a device for a battery pack manufacturing process as well as a method for thermally connecting a plurality of battery cells to a cooling plate, to optimize the thermal performance of the manufactured battery pack.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a manufacturing device for a battery pack including a frame for stacking battery cells, and a cooling plate with a gap filler material arranged on the frame, includes a vacuum bonnet for sealing to a circumference of the battery cells and applying a vacuum for sucking the gap filler along adjacent cavities.

According to another aspect of the present disclosure, a method for thermally connecting a plurality of battery cells to a cooling plate, wherein the method includes the steps of applying a gap filler onto the cooling plate, placing the battery cells onto the gap filler, and at least partially evacuating an atmosphere surrounding the battery cells such that an under-pressure is established which sucks the gap filler along adjacent cavities.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 is a schematic view on a device for a battery pack manufacturing process to thermally connect battery cells to a cooling plate.
FIG. 2 is a schematic view according to the disclosure of FIG. 1 in a further step of the manufacturing process.
FIG. 3 is a closer view on the schematic view according to FIG. 1 and FIG. 2.
FIG. 4a and FIG. 4b are a schematic view from below the battery cells.
FIG. 5 is a schematic diagram of a method for thermally connecting battery cells to a cooling plate.

### Detailed Description of the Invention

Reference will now be made in detail to embodiments, examples of which are illustrated in the accompanying drawings. The effects and features of the exemplary embodiments, along with their implementation methods, will be described with reference to the accompanying drawings. In the drawings, like reference numerals denote like elements, and redundant descriptions are omitted. The present disclosure, however, may be embodied in various different forms and should not be construed as being limited to the illustrated embodiments. Rather, these embodiments are provided as examples to ensure that the disclosure is thorough and complete, fully conveying the embodiments and features of the present disclosure to those skilled in the art.

Accordingly, processes, elements, and techniques that are not considered essential for a complete understanding of the aspects and features of the present disclosure by those skilled in the art may not be described.

As used herein, the term "and/or" includes all combinations of one or more of the associated listed items. Expressions such as "at least one of", when preceding a list of elements, modify the entire list of elements and not the individual elements within the list. Further, the use of "may" when describing embodiments of the present disclosure refers to "one or more embodiments of the present disclosure." In the following description of embodiments of the present disclosure, a singular form of a term may include plural form unless the context clearly indicates otherwise.

It will be understood that although the terms "first" and "second" are used to describe various elements, these elements should not be limited by these terms. These terms are merely used to distinguish one element from another. For example, a 'first' element may be referred to as a 'second' element, and vice versa, without altering the scope of the present disclosure.

It will be further understood that the terms "include," "comprise," "including," or "comprising" specify a property, a region, a number, a step, a process, an element, a component, or a combination thereof, but do not exclude other properties, regions, numbers, steps, processes, elements, components, or combinations thereof.

The terms "essentially forming" and "consisting essentially of" mean that specific additional components may be present, provided that they do not materially affect the essential characteristics of a composition.

It will also be understood that when a film, a region, or an element is referred to as being "above" or "on" another film, region, or element, it may be directly on the another film, region, or element, or there may be intervening films, regions, or elements.

Herein, the terms 'upper' and 'lower' are defined according to the z-axis. For example, the upper cover is positioned at the upper part of the z-axis, while the lower cover is positioned at the lower part thereof. In the drawings, the sizes of elements, layers, and regions may be exaggerated for clarity. Specifically, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (for example an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, for example on a PCB or another kind of circuit carrier. The conducting elements may include metallization, for example surface metallizations and/or pins, and/or may include conductive polymers or ceramics. Further electrical energy might be transmitted via wireless connections, for example using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

Unless otherwise defined, all terms (including technical and scientific terms) used herein shall have the same meanings commonly understood by one of ordinary skill in the relevant art to which the present disclosure belongs. It will be further understood that terms defined in commonly used dictionaries, should be interpreted in a manner consistent with their meaning in the context of the relevant art and/or the present specification, and should not be interpreted in an idealized or overly formal sense, unless expressly so defined herein.

### General Concept

According to one aspect of the present disclosure, a manufacturing device including a frame for stacking battery cells, a cooling plate with a gap filler material arranged on the frame, the device including a vacuum bonnet for sealing to a circumference of the battery cells and applying a vacuum for sucking the gap filler along adjacent cavities.

In other words, under-pressure on a cell stack of the battery cells during assembly with the cooling plate and the applied gap filler improves the effective wetting area which consequently improves cooling performance and mechanical bond properties for the battery pack. In addition, it allows the gap filler material to more easily flow upwards along the cell can for an even better mechanical connection and improved cooling performance. Also, lower viscosity gap filler blends can be used in order to not have to rely on the viscosity properties for proper battery cell wetting.

According to an embodiment of the present disclosure, the device further includes suction cup grippers to grip every battery cell individually. The individual grip of the battery cells prevents the whole cell stack from sagging.

According to another embodiment of the present disclosure, the suction cup grippers are arranged in the vacuum bonnet. When the vacuum bonnet covers the suction cups, every suction cup gripper, that is connected with a battery cell, can be set into an under-pressure range to allow the gap filler material to flow between the battery cells.

According to another embodiment of the present disclosure, the vacuum bonnet is shaped to cover the battery cells. Thus, the vacuum bonnet is able to seal off against the entire circumference of the cell stack. The under-pressure can be more effectively applied.

According to another embodiment of the present disclosure, the vacuum bonnet entirely seals the battery cells together with the frame. Thus, a vacuum chamber can be established in which the gap filler material can easily flow into the cavities between the battery cells.

According to another aspect of the present disclosure, a method for thermally connecting a plurality of battery cells to a cooling plate, includes the steps of applying a gap filler onto the cooling plate, placing the battery cells onto the gap filler, and at least partially evacuating an atmosphere surrounding the battery cells such that an under-pressure is established which sucks the gap filler along adjacent cavities.

According to an embodiment of the present disclosure, a vacuum for the under-pressure is applied by a vacuum bonnet which seals to a circumference of the battery cells. The vacuum bonnet can be lid shaped to fit over the battery cells at least partially around the battery cells. In this case the vacuum bonnet can easily be placed above the battery cells, after they have been arranged accordingly.

According to another embodiment of the present disclosure, the suction cup grippers grip every battery cell individually. The suction cup grippers allow the battery cells to stay at level and prevent sagging of the battery cells, when every cell is gripped individually.

According to another embodiment of the present disclosure, the vacuum bonnet covers the suction cup grippers. When the vacuum bonnet covers the suction cup grippers, the vacuum can effectively be established, while the battery cells are held in place simultaneously. Thus, the production process is further improved which improves the quality of a battery pack product.

According to another embodiment of the present disclosure, the battery cells are arranged in a cell stack and wherein the vacuum bonnet covers the entire cell stack. The cell stack can be compressed to assure a good mechanical and thermal connection between the separate battery cells.

According to another embodiment of the present disclosure, the battery cells are inserted into a frame with pre-applied gap filler. The frame can be corresponding to the vacuum bonnet, meaning, that the frame can be seen as a pot wherein the vacuum bonnet is the lid of the pot, allowing the battery cells to be in a vacuum environment, so that the gap filler can evenly flow into the cavities between the battery cells and air bubbles can be sucked out by the vacuum, or more precisely by the vacuum bonnet.

### Specific Embodiments

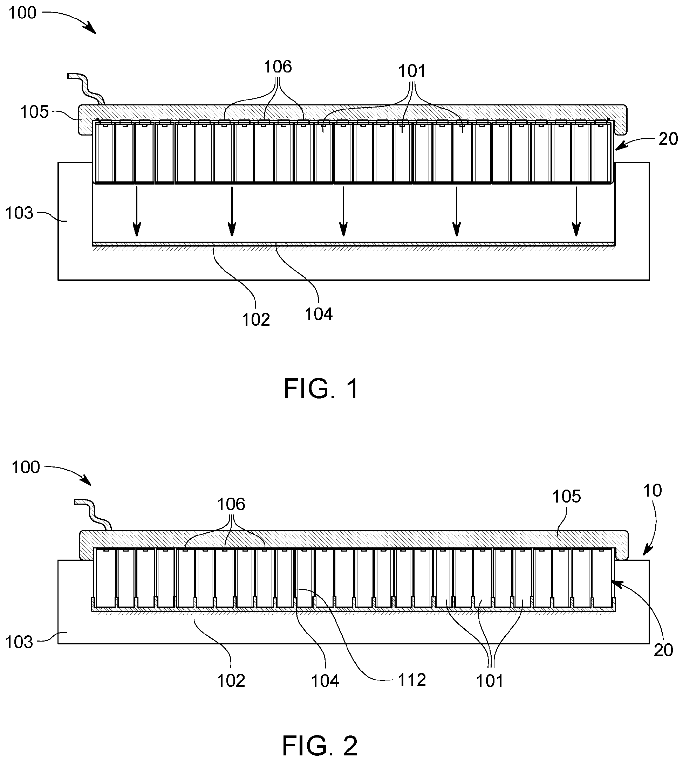

FIG. 1 is a schematic view on a device 100 for a battery pack 10 (see FIG. 2) manufacturing process to thermally connect battery cells 101 to a cooling plate 102. The battery cells 101 are placed and stacked into a frame 103. Within the frame 103 the cooling plate 102 is arranged. A gap filler material 104 is applied on the cooling plate 102. As can be seen in FIG. 1 a vacuum bonnet 105 for sealing to a circumference of the battery cells 101 is used to place the battery cells 101 into the frame 103.

To prevent sagging of a cell stack 20 of battery cells 101, separate suction cup grippers 106 are arranged in the vacuum bonnet 105 to grip each battery cell 101 individually.

FIG. 2 shows the schematic view according to FIG. 1 when the battery cells 101 are placed in the frame 103. The vacuum bonnet 105 and the frame 103 correspond to one another so that the battery cells 101 are entirely covered by the frame 103 and the vacuum bonnet 105. During the whole process, an under-pressure is applied by the vacuum bonnet 105. It can be seen that the gap filler material 104 is sucked along adjacent cavities (or gaps or crevices) 112 between the battery cells 101.

The under-pressure on the battery cells 101 during assembly with the cooling plate 102 and the applied gap filler material 104 improves the effective wetting area which consequently improves cooling performance and mechanical bond properties for the battery pack 10. In addition, it allows the gap filler material 104 to more easily flow upwards along the battery cells 101 for an even better mechanical connection and improved cooling performance. Also, lower viscosity gap filler blends can be used in order to not have to rely on the viscosity properties for proper battery cell wetting.

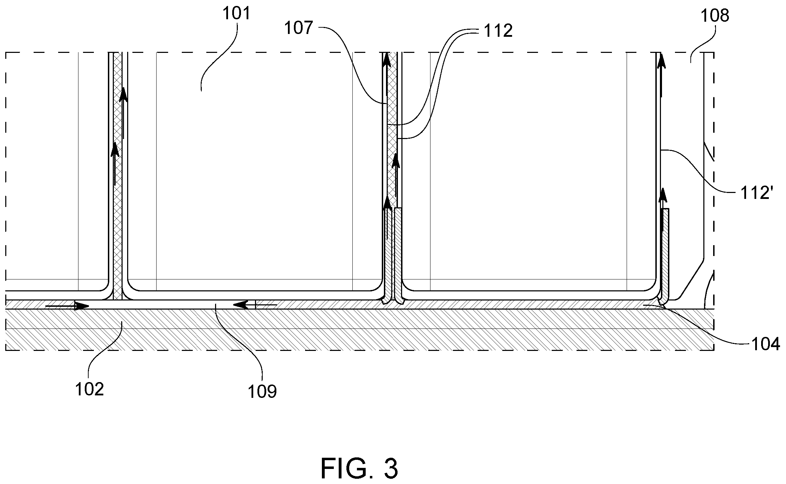

FIG. 3 shows a closer look at a section of the embodiment according to FIG. 1 and FIG. 2. As can be seen, the gap filler material 104 travels through cavities 112 between battery cells 101 and cell spacers 107, that are used to add a defined space between the battery cells 101. Furthermore, an end plate 108 is included, whereas the gap filler material 104 is also sucked into cavity 112' between the end plate 108 and the battery cell 101 closest to the end plate 108. The air suction resulting from under-pressure is indicated by arrows. In this stage of the process, it can be seen, that an air cavity 109 is formed between the cooling plate 102 and the battery cells 101. Because of the vacuum that is produced by the vacuum bonnet 105, the air cavity 109 is sucked out, leaving almost only gap filler material 104 and no air between the cavities.

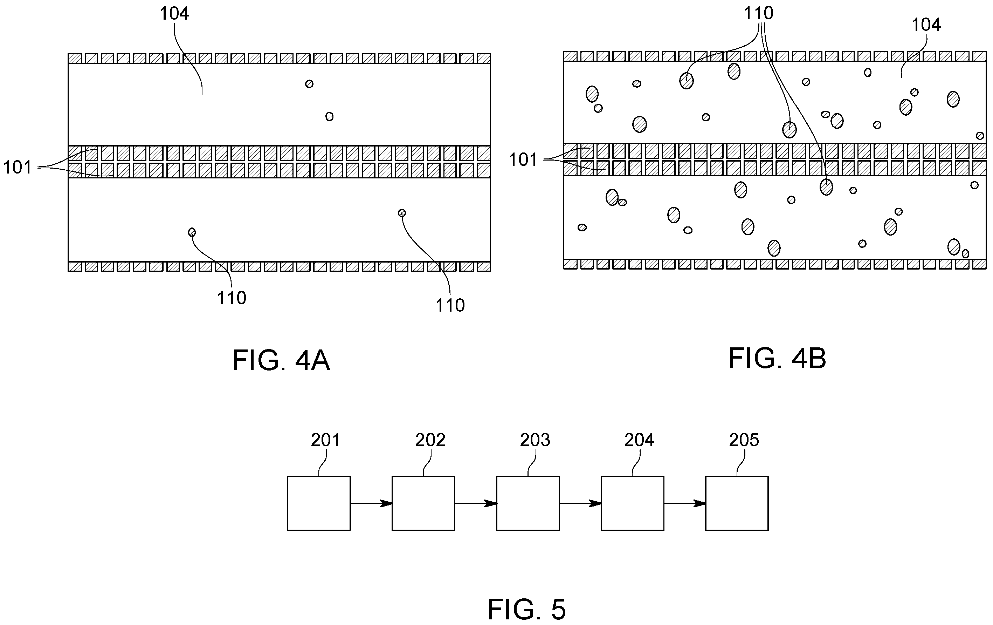

FIG. 4a and FIG. 4b show a schematic view from below the battery cells 101. It can be seen in FIG. 4a that the gap filler material, that has been applied according to the disclosed method, includes just a few small air bubbles 110, whereas the conventional method, as shown in FIG. 4b, leaves a lot more air bubbles 110 at the magnitude of around 10. Furthermore, the air bubbles 110, that are included with the conventional method are bigger in volume.

FIG. 5 illustrates a schematic diagram of a method for thermally connecting battery cells 101 to a cooling plate 102 according to an embodiment. In step 201 the battery cells 101 are being stacked and compressed. The suction cup grippers 106 ensure that the battery cells 101 stay in the compressed state. The suction cup grippers 106 grip every battery cell 101 individually to prevent sagging of the cell stack.

In step 202 the vacuum bonnet 105 covers the suction cup grippers 106, and entire cell stack 20 of battery cells 101, whereas the vacuum bonnet 105 seals off against the entire circumference of the cell stack 20. In step 203 the whole cell stack 20 is inserted into the frame 103 that holds the cooling plate 102 with pre-applied gap filler material 104. The vacuum is active during the entire insertion process.

In step 204 the vacuum sucks out all air bubbles and ensures the complete wetting of gap filler material 104 on the battery cells. Thus, the vacuum sucks the gap filler material 104 into all crevices to improve the thermal interface to the cooling plate 102, the frame 103 and the end plate 108.

Finally, in step 205, the vacuum bonnet 105, together with the suction cup grippers 106 are released and removed from the cell stack 20.

### Reference signs

- 10: battery pack
- 20: cell stack
- 100: device
- 101: battery cell
- 102: cooling plate
- 103: frame
- 104: gap filler material
- 105: vacuum bonnet
- 106: suction cup gripper
- 107: cell spacer
- 108: end plate
- 109: air cavity
- 110: air bubble
- 112: cavity
- 112': cavity
- 201: stacking and compressing
- 202: covering of cell stack
- 203: frame insertion
- 204: vacuum suction
- 205: release of battery cells

## Claims

1. A manufacturing device (100) for a battery pack (10) comprising a frame (103) for stacking battery cells (101), and a cooling plate (102) with a gap filler material (104), arranged on the frame (103), the device (100) comprising:
a vacuum bonnet (105) for sealing to a circumference of the battery cells (101) and applying a vacuum for sucking the gap filler material (104) along adjacent cavities.

2. The device (100) as claimed in claim 1, further comprising suction cup grippers (106) to grip every battery cell (101) individually.

3. The device (100) as claimed in claim 2, wherein the suction cup grippers (106) are arranged in the vacuum bonnet (105).

4. The device (100) as claimed in claims 2 or 3, wherein the vacuum bonnet (105) is shaped to cover the battery cells (101).

5. The device (100) as claimed in claims 1 to 4, wherein the vacuum bonnet (105) entirely seals the battery cells (101) together with the frame (103).

6. A method for thermally connecting a plurality of battery cells (101) to a cooling plate (102), wherein the method comprises the steps of:
a) applying a gap filler material (104) onto the cooling plate (102);
b) placing the battery cells (101) onto the gap filler material (104); and
c) at least partially evacuating an atmosphere surrounding the battery cells (101) such that an under-pressure is established which sucks the gap filler material (104) along adjacent cavities.

7. The method as claimed in claim 6, wherein a vacuum for the under-pressure is applied by a vacuum bonnet (105) which seals to a circumference of the battery cells (101).

8. The method as claimed in claim 7, wherein suction cup grippers (106) grip every battery cell (101) individually.

9. The method as claimed in claim 8, wherein the vacuum bonnet (105) covers the suction cup grippers (106).

10. The method as claimed in claim 8 or 9, wherein the battery cells (101) are arranged in a cell stack (20) and wherein the vacuum bonnet (105) covers the entire cell stack (20).

11. The method as claimed in any of the claims 6 to 10, wherein the battery cells (101) are inserted into a frame (103) in which the cooling plate (102) with pre-applied gap filler material (104) is arranged.
